(19) Europäisches Patentamt
European Patent Office
Office européen des brevets

(11) EP 1 436 338 B1

(12) FASCICULE DE BREVET EUROPEEN

(45) Date de publication et mention de la délivrance du brevet:
**03.05.2006 Bulletin 2006/18**

(21) Numéro de dépôt: **01996564.9**

(22) Date de dépôt: **13.11.2001**

(51) Int Cl.:
***C08F 220/24*** (2006.01)

(86) Numéro de dépôt international:
**PCT/FR2001/003539**

(87) Numéro de publication internationale:
**WO 2002/040557 (23.05.2002 Gazette 2002/21)**

(54) **COPOLYMERES FLUORES POUR LE TRAITEMENT HYDROPHOBE ET OLEOPHOBE DES MATERIAUX DE CONSTRUCTION**

FLUORIERTE COPOLYMERE ZUR HYDROPHOBIERUNG UND OLEOPHOBIERUNG VON BAUMATERIALIEN

FLUORINATED COPOLYMERS FOR HYDROPHOBIC AND OLOEPHOBIC TREATMENT OF BUILDING MATERIALS

(84) Etats contractants désignés:
**DE FR GB IT**

(30) Priorité: **15.11.2000 FR 0014723**

(43) Date de publication de la demande:
**14.07.2004 Bulletin 2004/29**

(73) Titulaire: **E.I. DU PONT DE NEMOURS AND COMPANY**
**Wilmington,**
**Delaware 19898 (US)**

(72) Inventeurs:
- **JUHUE, Didier**
  **F-27200 Vernon (FR)**
- **PABON, Martial**
  **F-92400 Courbevoie (FR)**
- **KOWALIK, André**
  **F-60270 Gouvieux (FR)**
- **CORPART, Jean-Marc**
  **F-95110 Sannois (FR)**

(74) Mandataire: **Morf, Jan Stefan**
**Patentanwälte Abitz und Partner**
**Postfach 86 01 09**
**81628 München (DE)**

(56) Documents cités:
**EP-A- 0 609 456**
**WO-A-97/39072**
**FR-A- 2 762 000**
**US-A- 4 972 037**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne de nouveaux copolymères acryliques fluorés cationiques, des compositions aqueuses les comprenant, et leur utilisation pour le revêtement et l'imprégnation de substrats divers tels que textiles, cuirs, bois, non-tissés, métaux, et plus particulièrement le revêtement et l'imprégnation des matériaux de construction, pour assurer leur protection durable contre l'eau et la salissure. Elle a enfin pour objet les substrats solides, et notamment les matériaux de constructions ainsi traités.

Il est connu depuis longtemps que les composés fluorés, et en particulier les compositions à base de polymères fluorés assurent la protection contre l'eau , l'huile et la graisse, de supports de nature très variée comme le textile, le cuir ou le papier.

Il est également reconnu que les polymères fluorés peuvent protéger efficacement les matériaux de construction contre les agressions extérieures telles que l'eau et la salissure.

Les compositions aqueuses, divulguées dans la demande internationale WO 97/39072 sont ainsi utiles pour cette dernière application. Les polymères de ce document ne contiennent pas de monome silané.

Le document FR 2762000 concerne la synthèse de copolymères fluorés en milieu organique pour le traitement hydrophobe et oléophobe de différents substrats.

La demande WO 00/05183 décrit une composition également adaptée à la protection des matériaux de construction contre l'eau et les salissures, qui comprend outre un copolymère tel que celui mentionné par la demande WO 97/39072 citée précédemment, un assistant de pénétration qui est un composé organique tensio-actif facilitant la pénétration et le mouillage d'un substrat calcaire et/ou silicié. Sur un plan pratique, la présence de cet assistant entraîne cependant aussi celle d'un solvant organique éventuellement toxique, et donc peu appréciée par les applicateurs.

La demande WO 97/00230 décrit une composition à base de polymère fluoré comprenant un monomère silané, utile pour traiter les substrats poreux tels que les matériaux de construction, contre les taches à base d'eau et de graisse. Cette composition est aqueuse et stable, et présente une bonne résistance à l'abrasion.

La tenue à l'abrasion caractérise la durabilité des traitements de surface des matériaux de construction. Cette tenue mécanique peut être évaluée à l'aide d'un "scrubbing test" (test de brossage) qui simule un nettoyage agressif réalisé sur le revêtement en présence d'un détergent. Ce test est notamment décrit dans le brevet WO 97/00230. Les copolymères compris dans la composition de WO 97/00230 sont cependant de type anionique. Ils pénètrent de façon importante à l'intérieur des substrats tels que les pierres calcaires ou le béton, et il est donc nécessaire d'en appliquer une forte concentration pour obtenir un revêtement hydrophobe et oléophobe de la surface du substrat qui soit efficace. Ils ont par conséquent l'inconvénient d'être peu économiques.

Il a maintenant été trouvé que l'introduction d'un monomère silané spécifique dans un polymère acrylique cationique fluoré permet d'obtenir un traitement hydrophobe et oléophobe des matériaux de construction efficace à faible concentration et présentant également une bonne tenue à l'abrasion. Ce polymère est en outre applicable sous la forme d'une dispersion aqueuse stable au stockage et exempte de solvant organique.

Les copolymères acryliques fluorés cationiques selon la présente invention sont obtenus par polymérisation d'un mélange de monomères comprenant en poids :

(a) de 50 à 92%, de préférence de 70 à 90%, d'un ou plusieurs monomères polyfluorés de formule générale :

Rf-B-O-C(O)-C(R)=CH-R (I)

dans laquelle :

- Rf représente un radical perfluoré à chaîne linéaire ou ramifiée, contenant 2 à 20 atomes de carbone, de préférence 4 à 16 atomes de carbone,
- B représente un enchaînement bivalent lié à O par un atome de carbone et pouvant comporter un ou plusieurs atomes d'oxygène, de soufre et/ou d'azote,
- l'un des symboles R représente un atome d'hydrogène et l'autre un atome d'hydrogène ou un radical alkyle contenant 1 à 4 atomes de carbone ;

(b) de 1 à 25%, de préférence de 8 à 18%, d'un ou plusieurs monomères de formule générale :

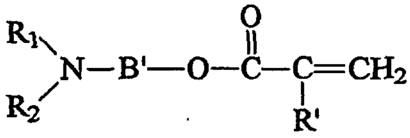

(II)

dans laquelle :

- B' représente un radical alkylène, linéaire ou ramifié, contenant 1 à 4 atomes de carbone,
- R' représente un atome d'hydrogène ou un radical alkyle contenant 1 à 4 atomes de carbone,
- les symboles $R_1$ et $R_2$, identiques ou différents, représentent chacun un atome d'hydrogène, un radical alkyle linéaire ou ramifié contenant de 1 à 18 atomes de carbone (de préférence de 1 à 4 atomes de carbone) ou un radical hydroxyéthyle ou benzyle, ou $R_1$ et $R_2$ ensemble avec l'atome d'azote auquel ils sont liés forment un radical morpholino, pipéridino ou pyrrofidinyle-1 ;

(c) de 0 à 25%, de préférence de 2 à 10%,d'un dérivé vinylique de formule générale :

$R''-CH=CH_2$ (III)

dans laquelle R" est un groupement alkylcarboxylate ou alkyléther contenant de 1 à 18 atomes de carbone, de préférence de 1 à 4 atomes de carbone ;
(d) de 0,5 à 20%, de préférence de 1 à 10%, d'un monomère de formule générale :

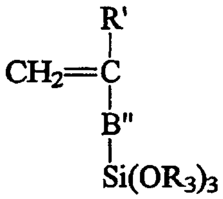

(IVA)

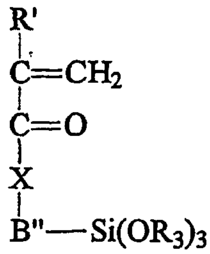

(IVB)

ou

dans laquelle:

- R' est tel que défini précédemment,
- B" représente B' tel que défini précédemment ou une liaison simple,
- X représente un atome d'oxygène, d'azote ou de soufre,
- $R_3$ représente un radical alkyle linéaire ou ramifié comprenant de 1 à 10, de préférence de 1 à 5 atomes de carbone ; et

(e) de 0 à 10 %, de préférence de 0 à 8 %, d'un monomère quelconque autre que les monomères de formules I, II, III et IV.

Les copolymères fluorés selon la présente invention sont préparés par copolymérisation des monomères en solution dans un solvant organique distillable. On entend par distillable tout solvant organique ou mélange de solvants organiques dont la température d'ébullition à pression atmosphérique est inférieure à 150°C. Le milieu réactionnel est ensuite dilué à l'eau en présence d'un acide minéral ou organique pour salifier les macromolécules.
Selon une variante préférée de l'invention, cette étape de dilution est réalisée en présence de peroxyde d'hydrogène, ou est suivie d'un traitement au moyen d'une solution aqueuse de peroxyde d'hydrogène.
Bien que ces copolymères acryliques cationiques fluorés soient plus particulièrement adaptés au traitement des matériaux de construction, ils peuvent aussi être utilisés pour le traitement oléophobe et hydrophobe d'autres

substrats tels que les papiers, les textiles, les non-tissés, les cuirs et les moquettes.

Selon la présente invention, on préfère utiliser :

***(a)*** comme monomères polyfluorés de formule I, les composés de formule :

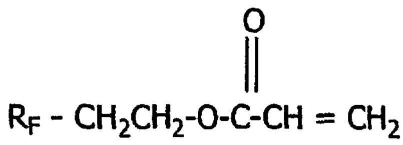

dans laquelle $R_F$ est un radical perfluoroalkyle contenant 4 à 16 atomes de carbone ;

***(b)*** comme monomère de formule II, le méthacrylate de diméthylaminoéthyle de formule : $(CH_3)_2N-CH_2-CH_2-OC(O)-C(CH_3)=CH_2$ ;

***(c)*** comme monomère de formule III, l'acétate de vinyle ; et

**(d*)*** comme monomère de formule IV, le vinyltrüsopropoxysilane de formule :

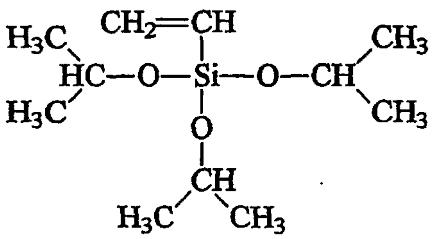

ou le méthacrylate de propyltrüsopropoxysilane de formule :

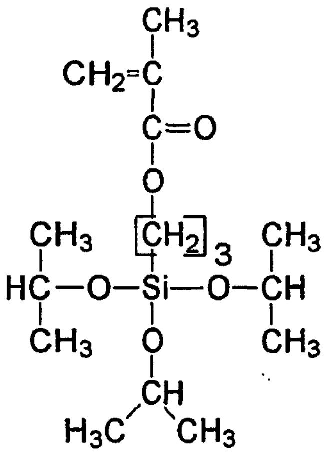

Comme solvant organique distillable, dans lequel est effectuée la copolymérisation, on peut mentionner à titre non limitatif des cétones (par exemple l'acétone, la méthyl éthyl cétone), des alcools (par exemple l'isopropanol), des éthers (par exemple l'éther méthylique).

Pour la mise en oeuvre de l'invention, on préfère utiliser comme solvant la méthyl isobutyl cétone (MIBK) ou la méthyl ethyl cétone (MEK) ou un mélange de celles-ci avec l'acétone.

La concentration totale des monomères dans le solvant ou mélange de solvants organique(s) peut aller de 20 à 70 % en poids et est de préférence comprise entre 40 et 60 %.

La copolymérisation est effectuée en présence d'au moins un amorceur, utilisé à raison de 0,1 à 2 % par rapport au poids total de monomères. Comme amorceurs, on peut utiliser des peroxydes tels que le peroxyde de benzoyle, le peroxyde de lauroyle, le peroxyde de succinyle et le perpivalate de tert-butyle, ou des composés azoïques comme, par exemple, l'azo-2,2'-bis-isobutyronitrile, et l'azo-4,4'-bis(cyano-4-pentanoïque). L'étape de copolymérisation peut être réalisée à une température allant de 40°C jusqu'au point d'ébullition du mélange réactionnel. De préférence, on opère entre 60 et 90°C.

L'étape de dilution consiste à ajouter à la solution organique du copolymère une solution aqueuse d'un acide minéral ou organique fort ou moyennement fort, c'est-à-dire dont la constante de dissociation ou la première constante de dissociation est supérieure à $10^{-5}$.

Comme exemples de tels acides on peut citer les acides chlorhydrique, bromhydrique, sulfurique, nitrique, phosphorique, acétique, formique, propionique ou lactique, mais de préférence on utilise l'acide acétique. La quantité de solution aqueuse à utiliser et sa concentration en acide doivent être suffisantes, d'une part, pour salifier complètement les fonctions amine apportées par le ou les monomère(s) de formule II et, d'autre part, pour obtenir une solution finale de copolymère ayant une teneur comprise entre 5 et 40 %, de préférence entre 20 et 30 %. Pour la salification complète des fonctions amines, la quantité d'acide est avantageusement comprise entre 0 et 5 équivalents acide par rapport au (x) monomère(s) de formule II, de préférence entre 1 et 2 équivalents.

La quantité de peroxyde d'hydrogène utilisée est comprise entre 0 et 10%, de préférence de 0,5 à 4 % par rapport au poids total de monomères initial. Le traitement s'effectue entre 25 et 100°C, de préférence de 70 à 85°C.

La présente invention a également pour objet les compositions aqueuses comprenant un copolymère fluoré tel que défini précédemment. Les dites compositions sont obtenues en complétant le procédé de fabrication du copolymère fluoré tel que défini précédemment par une étape de distillation, afin d'éliminer toute trace du solvant organique de synthèse. Les compositions aqueuses obtenues ne présentent donc pas de point d'éclair entre 0 et 100°C suivant la norme ASTM D3828. La distillation peut s'effectuer à pression atmosphérique ou réduite. Ces compositions aqueuses se présentent généralement sous forme de dispersions stables au cours du temps. Ainsi ces dispersions demeurent homogènes, et peuvent donc être transportées et stockées tout en demeurant aptes à leur mise en oeuvre pour le traitement hydrophobe et oléophobe des substrats. Elles sont également avantageusement diluables à l'eau.

La concentration de copolymère fluoré selon l'invention dans l'eau est généralement comprise entre 1 et 50 %, de préférence entre 20 % et 30 %.

La présente invention a également pour objet un substrat solide comprenant, et de préférence revêtu par, au moins un copolymère fluoré selon l'invention, tel que défini précédemment.

Comme substrats susceptibles d'être rendus oléophobes et hydrophobes avec les produits selon l'invention, on peut utiliser des matériaux très divers tels que, par exemple, les papiers, les cartons et les matériaux assimilés, les articles tissés ou non-tissés à base de cellulose ou de cellulose régénérée, de fibres naturelles, artificielles ou synthétiques comme le coton, l'acétate de cellulose, la laine, la soie, les fibres de polyamide, polyester, polyoléfine, polyuréthane ou polyacrylonitrile, le cuir, les matières plastiques, le verre, le bois, les métaux, la porcelaine, les surfaces peintes.

On préfère toutefois utiliser un matériau de construction tel que la brique, les tuiles, les carreaux de terre cuite ou de céramique, les pierres naturelles ou reconstituées, le plâtre, le béton, le ciment ou mortier, le bois, le verre, les métaux et les matières plastiques.

Le béton, la pierre, la brique et les carrelages sont un matériau encore plus particulièrement préféré.

Lorsque, selon une variante préférée de l'invention, le substrat solide est un matériau de construction, la dose de copolymère fluoré appliquée est généralement comprise entre 0,1 et 10 $g/m^2$, de préférence entre 1 et 5 $g/m^2$ par rapport à la surface du dit substrat.

L'application des compositions peut se faire en une ou plusieurs couches suivant les techniques bien connues en soi, par exemple, par pulvérisation, immersion, étendage à la brosse ou au rouleau.

Les compositions selon l'invention peuvent également être mélangées à d'autres compositions, notamment des compositions comprenant un polymère acrylique cationique fluoré sans monomère silané. Elles peuvent également être mélangées avec des alcools polyvinyliques comme décrit dans le brevet EP-A 0 714 870.

Le revêtement obtenu est classiquement séché à température ambiante. Il peut aussi être séché à température plus élevée, dans un four ou une étuve. Il peut également être appliqué sur un support chaud.

Pour évaluer les performances des substrats traités selon l'invention, on a utilisé les tests suivants :

- **Test d'oléophobie**

L'oléophobie est mesurée suivant la méthode décrite dans « AATCC Technical Manual », Test Method 118-1992, qui évalue la non-mouillabilité du substrat par une série de liquides huileux numérotés de 1 à 8 :

- N° 1 Huile de Vaseline
- N° 2 Huile de Vaseline/n-Hexadécane (65/35)

- N° 3 n-Hexadéca'1e
- N° 4 n-Tétradécane
- N° 5 n-Dodécane
- N° 6 n-Décane
- N° 7 n-Octane
- N° 8 n-Heptane

Le test consiste à déposer sur le substrat traité des gouttes de ces mélanges, puis à mesurer l'effet de la goutte après 30 secondes de contact.

La cotation se fait en donnant la valeur du numéro de la dernière goutte de liquide qui n'a ni pénétré, ni mouillé le substrat.

- **Test d'hydrophobie**

La méthode est inspirée du test d'oléophobie décrit ci-dessus. Les liquides de test numérotés de 1 à 10 sont des mélanges pondéraux d'eau déminéralisée et de Propanol 2.

| | **Composition pondérale** | |
|---|---|---|
| **Références des liquides tests** | **Eau déminéralisée** | **Propanol-2** |
| 1 | 90 | 10 |
| 2 | 80 | 20 |
| 3 | 70 | 30 |
| 4 | 60 | 40 |
| 5 | 50 | 50 |
| 6 | 40 | 60 |
| 7 | 30 | 70 |
| 8 | 20 | 80 |
| 9 | 10 | 90 |
| 10 | 0 | 100 |

Le test consiste à déposer sur les substrats traités des gouttes de ces mélanges, puis à mesurer l'effet de la goutte après 30 secondes de contact.

La cotation se fait en donnant la valeur du numéro de la dernière goutte de liquide qui n'a ni pénétré, ni mouillé le substrat

**- Test de tenue à la pression hydrostatique**

Ce test consiste à mesurer la résistance à l'eau d'un substrat vertical en terre cuite traité selon l'invention, lorsque l'eau est appliquée à la surface du dit substrat à une certaine pression hydrostatique. Ce test vise à évaluer la résistance à la pluie par vent fort d'une façade traitée selon l'invention.

On utilise pour cela le dispositif représenté sur la figure 1 comprenant une pipe de verre (1) fixée à la surface du substrat vertical (2), et remplie d'eau (3) afin d'exercer une pression hydrostatique à la surface du substrat (2).

La colonne d'eau a une hauteur de 95 mm. Ceci donne sur la surface du substrat une pression hydrostatique de 950 Pa (égale à 95 $Kg/m^2$).

La pipe de verre est fixée sur le substrat à l'aide d'un adhésif élastomère (4) à base de silicone. Le bouchon (6) fixé sur le capillaire (5) permet d'éviter l'évaporation de l'eau.

Il a été vérifié préalablement à la mise en oeuvre du test que la baisse du niveau d'eau dans la pipe de verre ne correspond qu'à l'absorption d'eau par le substrat et qu'elle n'est pas influencée par l'évaporation ou par l'absorption d'eau par l'adhésif (4). Pour ce faire, ce dispositif a été fixé sur une plaque de verre en tant que substrat . Après sept jours, aucune baisse de niveau d'eau n'a été observée.

Le test consiste à mesurer la quantité d'eau contenue dans la pipe de verre qui est absorbée par le substrat en fonction du temps. Cette quantité d'eau est mesurée pour le substrat non traité et pour le même substrat traité.

L'efficacité du traitement (exprimé en %) est défini par la formule :

$$\text{Efficacité (\%)} = 100\text{x}(1-Q_1/Q_0)$$

dans laquelle:

$Q_0$ représente la quantité d'eau aborbée par le support non traité ;
$Q_1$ réprésente la quantité d'eau absorbée par le support traité.

**- Test de tenue au brossage ("scrubbing test")**

Ce test consiste à mesurer la tenue au brossage des propriétés d'hydrophobie et d'oléophobie du substrat traité au moyen d'une composition aqueuse selon l'invention, telles que déterminées par les 3 tests précédemment décrits, dans des conditions standardisées de nettoyage ou brossage.
Il met en oeuvre une opération de nettoyage du susbtrat effectué dans les conditions suivantes :

- dépôt de 2 ml d'une solution aqueuse à 6% en poids de détergent (Typol)
- cinquante passages sur le substrat d'une brosse en NYLON de surface de 2,5 x 7 $cm^2$, appliquée avec une force perpendiculaire au support de 10 N, correspondant à un durée totale de 45 s ;
- rinçage de la surface du substrat durant 1 mn à l'eau de ville ;
- élimination de l'eau de ville par rinçage à l'eau déminéralisée.

Les exemples suivants illustrent l'invention sans la limiter. Les parties indiquées sont en poids, sauf mention contraire.

**EXEMPLE 1**

Dans un réacteur de 600 parties en volume, équipé d'une agitation, d'un thermomètre, d'un réfrigérant à reflux, d'une ampoule de coulée, d'une arrivée d'azote et d'un dispositif de chauffage, on charge :

- 40 parties de MIBK, 26 parties d'acétone,
- 14,7 parties de méthacrylate de diméthylaminoéthyle (monomère de formule (II)),
- 7,8 parties d'acétate de vinyle (monomère de formule (III)),
- 3,9 parties de vinyl triisopropoxysilane (monomère de formule (IVA)
- 76 parties d'un mélange d'acrylates fluorés (monomère de formule (I)) de formule :

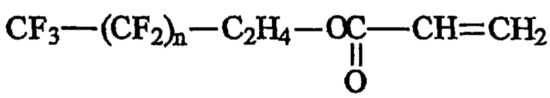

dans laquelle n est égal à 5, 7, 9, 11 et 13, dans des rapports en poids moyens et respectifs de 1/63/25/9/3 ; et enfin
- 0,38 parties d'acide 4,4'-azobis(cyano-4-pentanoïque).

On chauffe à 70°C sous atmosphère d'azote pendant 4 heures, puis on introduit 0,3 parties d'acide 4,4'-azobis (cyano-4-pentanoïque) et on laisse le réacteur à 70°C pendant 4 heures.
Puis on coule en 3 heures à 70°C une solution aqueuse comportant 290 parties d'eau, 7,6 parties d'acide acétique et 2,4 parties d'eau oxygénée à 35 % en poids.
On maintient deux heures à 70°C sous balayage d'azote, puis on distille la solution sous pression réduite de manière à obtenir une solution à 25% de copolymère fluoré selon l'invention.
Puis on refroidit jusqu'à la température ambiante. On obtient ainsi 390 parties d'une dispersion ambrée (S1) parfaitement stable dans le temps du copolymère acrylique cationique fluoré selon l'invention dont la composition pondérale théorique est de 74/14/8/4 en monomères de formule respective I/II/III/IVA.
Cette dispersion ne comprend pas de solvant organique, et ne présente donc pas de point d'éclair entre 0 et 100°C selon la norme ASTM D3828.

## EXEMPLE COMPARATIF 1

On procède comme dans l'exemple 1 mais en supprimant totalement le vinyl triisopropoxysilane et en le remplaçant par de l'acide méthacrylique et de l'acétate de vinyle. On introduit ainsi 15,2 parties de méthacrylate de diméthylaminoéthyle, 1,2 parties d'acide méthacrylique, 8,4 parties d'acétate de vinyle, 77,6 parties du mélange d'acrylates fluorés.

On obtient alors 390 parties d'une dispersion ambrée (Sc1) parfaitement stable dans le temps d'un copolymère acrylique cationique fluoré sans monomère silané. Cette solution ne présente pas de point d'éclair entre 0 et 100°C selon la norme ASTM D3828.

## EXEMPLE 2

On utilise les solutions (S1) et (Sc1). On prépare à partir de celles-ci les solutions diluées Sd1 et Sd2 décrites ci-dessous :

| Composition (g/l) | Sd1 | Sd2 |
|---|---|---|
| S1 | 80 | 0 |
| Sc1 | 0 | 80 |
| Eau | 920 | 920 |
| *Total* | 1000 | 1000 |

Les solutions diluées sont appliquées en croix au pinceau (largeur de 4-5 cm) sur des carreaux de terre cuite (par exemple, provenance Brunateau S.A., F-40990 St Paul les Dax). Le dépôt est de 100 ± 10 g/$m^2$ de composition diluée, correspondant environ à 2 g/$m^2$ de copolymère. Les carreaux ainsi traités sont séchés trois jours à l'air libre et à température ambiante.

Les carreaux sont ensuite soumis aux tests d'oléophobie, d'hydrophobie et de tenue à la pression hydrostatique avant et après brossage. Les résultats de ces tests sont reportés ci-après.

### Avant brossage :

| Traitement | Test d'oléophobie | Test d'hydrophobie |
|---|---|---|
| Sd1 | 8 | 10 |
| Sd2 | 8 | 10 |

Les résultats de tenue à la pression hydrostatique sont indiqués dans la figure 2 dans laquelle sont représentés en ordonnée l'efficacité (en %) et en abscisse le temps de mise en contact du substrat traité avec l'eau (en heures), selon que le traitement appliqué est Sd1 ou Sd2.

Il apparaît clairement que le copolymère fluoré de l'exemple 1 confère au substrat traité une très bonne efficacité dans le test de tenue à la pression hydrostatique : celle-ci est en effet comprise entre 95 et 100 % selon la durée de mise en contact avec l'eau. Au contraire, le polymère selon l'exemple comparatif 1 ne confère au substrat traité qu'une efficacité qui ne dépasse pas 88%.

### Après brossage :

| Traitement | Test d'oléophobie | Test d'hydrophobie |
|---|---|---|
| Sd1 | 5 | 4 |
| Sd2 | 3 | 3 |

Les résultats de tenue à la pression hydrostatique sont indiqués dans la figure 3.

Il apparaît ainsi que le polymère fluoré de l'exemple 1 permet au substrat traité de mieux conserver ses propriétés oléophobiques après brossage (variation de cotation de 8 à 5) que celui de l'exemple comparatif 1 (cotation chutant de 8 à 3).

Il apparaît enfin clairement que le polymère fluoré de l'exemple 1 conserve après abrasion une très bonne tenue à la pression hydrostatique (diminution d'efficacité de seulement 5%), alors que la tenue à la pression procurée par celui de l'exemple comparatif chute de 15% après abrasion.

**EXEMPLE 3**

On prépare un copolymère acrylique cationique fluoré en répétant l'exemple 1, sauf que l'on remplace le vinyl trüsopropoxysilane (monomère de formule (IVA)), par le méthacrylate de propyltriisopropoxysilane (monomère de formule (NB)).

La mise en oeuvre des tests d'application conduit à des résultats identiques à ceux obtenus pour le copolymère fluoré de l'exemple 1.

**Revendications**

1. Copolymères acryliques fluorés cationiques susceptibles d'être obtenus par polymérisation d'un mélange de monomères comprenant en poids :

(a) de 50 à 92%, de préférence de 70 à 90%, d'un ou plusieurs monomères polyfluorés de formule générale :

Rf-B-O-C(O)-C(R)=CH-R (I)

dans laquelle :

- Rf représente un radical perfluoré à chaîne linéaire ou ramifiée, contenant 2 à 20 atomes de carbone, de préférence 4 à 16 atomes de carbone,
- B représente un enchaînement bivalent lié à O par un atome de carbone et pouvant comporter un ou plusieurs atomes d'oxygène, de soufre et/ou d'azote,
- l'un des symboles R représente un atome d'hydrogène et l'autre un atome d'hydrogène ou un radical alkyle contenant 1 à 4 atomes de carbone;

(b) de 1 à 25%, de préférence de 8 à 18%, d'un ou plusieurs monomères de formule générale :

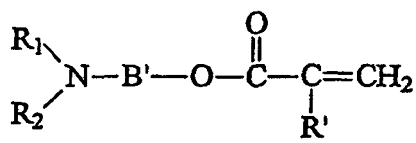

(II)

dans laquelle :

- B' représente un radical alkylène, linéaire ou ramifié, contenant 1 à 4 atomes de carbone,
- R' représente un atome d'hydrogène ou un radical alkyle contenant 1 à 4 atomes de carbone,
- les symboles $R_1$ et $R_2$, identiques ou différents, représentent chacun un atome d'hydrogène, un radical alkyle linéaire ou ramifié contenant de 1 à 18 atomes de carbone (de préférence de 1 à 4 atomes de carbone) ou un radical hydroxyéthyle ou benzyle, ou $R_1$ et $R_2$ ensemble avec l'atome d'azote auquel ils sont liés forment un radical morpholino, pipéridino ou pyrrolidinyle-1 ;

(c) de 0 à 25%, de préférence de 2 à 10%,d'un dérivé vinylique de formule générale :

$R''-CH=CH_2$ (III)

dans laquelle R" est un groupement alkylcarboxylate ou alkyléther contenant de 1 à 18 atomes de carbone, de préférence de 1 à 4 atomes de carbone ;
(d) de 0,5 à 20%, de préférence de 1 à 10%, d'un monomère de formule générale :

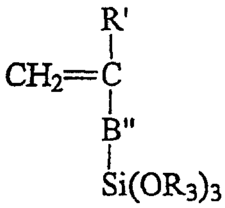

(IVA)

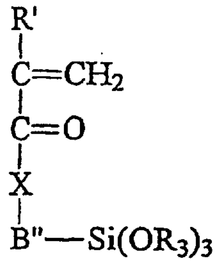

(IVB)

ou

dans laquelle:

- R' est tel que défini précédemment,
- B" représente B' tel que défini précédemment ou une liaison simple,
- X représente un atome d'oxygène, d'azote ou de soufre,
- $R_3$ représente un radical alkyle linéaire ou ramifié comprenant de 1 à 10, de préférence de 1 à 5 atomes de carbone ; et

(e) de 0 à 10 %, de préférence de 0 à 8 %, d'un monomère quelconque autre que les monomères de formules I, II, III et IV ;
la dite polymérisation comprenant:

- la mise en solution des monomères dans un solvant organique distillable ayant une température d'ébullition à pression atmosphérique inférieure à 150°C; puis
- la dilution du milieu réactionnel à l'eau en présence d'un acide minéral ou organique pour salifier les macromolécules.

**2.** Copolymères acryliques fluorés cationiques selon la revendication 1, **caractérisés en ce que** la dilution à l'eau est réalisée en présence de peroxyde d'hydrogène, ou est suivie d'un traitement au moyen d'une solution aqueuse de peroxyde d'hydrogène.

**3.** Copolymères acryliques fluorés cationiques selon l'une des revendications 1 ou 2, **caractérisés en ce que** l'on utilise :

***(a)*** comme monomères polyfluorés de formule I, les composés de formule:

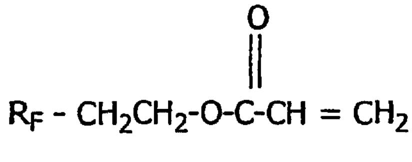

dans laquelle $R_F$ est un radical perfluoroalkyle contenant 4 à 16 atomes de carbone ;
***(b)*** comme monomère de formule II, le méthacrylate de diméthylaminoéthyle de formule :

$(CH_3)_2N-CH_2-CH_2-OC(O)-C(CH_3)=CH_2$ ;

***(c)*** comme monomère de formule III, l'acétate de vinyle ; et
***(d)*** comme monomère de formule IV, le vinyltriisopropoxysilane ou le méthacrylate de propyltriisopropoxysilane.

**4.** Copolymères acryliques fluorés cationiques selon l'une des revendications 1 à 3, **caractérisés en ce que** l'on utilise comme solvant organique la méthyl isobutyl cétone (MIBK) ou la méthyl ethyl cétone (MEK) ou un mélange de celles-ci avec l'acétone.

**5.** Copolymères acryliques fluorés cationiques selon l'une des revendications 2 à 4, **caractérisés en ce que** la quantité de peroxyde d'hydrogène utilisée est comprise entre 0,5 et 4 % par rapport au poids total de monomères initial.

**6.** Compositions aqueuses comprenant de 1 à 50 %, de préférence de 20 % à 30 % d'un copolymère acrylique fluoré cationique tel que défini dans l'une des revendications 1 à 5.

**7.** Substrat solide comprenant, et de préférence revêtu par, au moins un copolymère acrylique fluoré cationique tel que défini dans l'une des revendications 1 à 5.

**8.** Substrat solide selon la revendication 7, **caractérisé en ce qu'**il s'agit d' un matériau de construction.

**9.** Substrat solide selon la revendication 8, **caractérisé en ce que** le matériau de construction est choisi parmi le béton, la pierre, la brique et les carrelages.

**10.** Matériau de construction selon l'une des revendication 8 ou 9 **caractérisé en ce que** la dose de copolymère appliquée est comprise entre 0,1 et 10 $g/m^2$, de préférence entre 1 et 5 $g/m^2$.

**Patentansprüche**

**1.** Fluorierte kationische Acrylcopolymere, die durch Polymerisation eines Gemischs von Monomeren erhalten werden können, die nach Gewicht Folgendes beinhalten:

(a) 50 bis 92%, vorzugsweise 70 bis 90%, eines oder mehrerer polyfluorierter Monomere der allgemeinen Formel:

Rf-B-O-C(O)-C(R)=CH-R (1)

wobei:

- Rf ein linear- oder verzweigtkettiges perfluoriertes Radikal mit 2 bis 20, vorzugsweise 4 bis 16 Kohlenstoffatomen darstellt,
- B eine mit O durch ein Kohlenstoffatom verbundene zweiwertige Verkettung darstellt, die ein oder mehrere Sauerstoff-, Schwefel- und/oder Stickstoffatome aufweisen kann,
- eines der Symbole R ein Wasserstoffatom und ein anderes ein Wasserstoffatom oder ein Alkylradikal mit 1 bis 4 Kohlenstoffatomen enthält;

(b) 1 bis 25%, vorzugsweise 8 bis 18%, eines oder mehrerer Monomere der allgemeinen Formel:

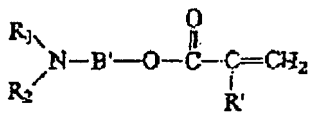

(II)

wobei:

- B' ein Alkylenradikal, linear oder verzweigt, mit 1 bis 4 Kohlenstoffatomen darstellt,
- R' ein Wasserstoffatom oder ein Alkylradikal mit 1 bis 4 Kohlenstoffatomen darstellt,
- die Symbole $R_1$ und $R_2$, identisch oder unterschiedlich, jeweils ein Wasserstoffatom, ein lineares oder

verzweigtes Alkylradikal mit 1 bis 18 Kohlenstoffatomen (vorzugsweise 1 bis 4 Kohlenstoffatomen) oder ein Hydroxyethyl- oder Benzylradikal repräsentieren, wobei $R_1$ und $R_2$ zusammen mit dem Stickstoffatom, mit dem sie verbunden sind, ein Morpholino-, Piperidino- oder Pyrrolidinyl-1-Radikal bilden;

(c) 0 bis 25%, vorzugsweise 2 bis 10%, eines Vinylderivats der allgemeinen Formel:

$$R''\text{-}CH{=}CH_2 \qquad \text{(III)}$$

wobei R" eine Alkylcarboxylat- oder Alkylethergruppierung ist, die 1 bis 18 Kohlenstoffatome, vorzugsweise 1 bis 4 Kohlenstoffatome enthält;

(d) 0,5 bis 20%, vorzugsweise 1 bis 10%, eines Monomers der allgemeinen Formel:

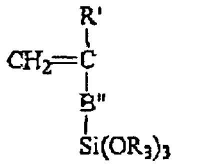

(IVA) oder

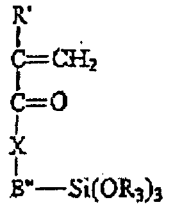

(IVB)

wobei:

- R' wie oben definiert ist,
- B" B' wie oben definiert oder eine einfache Verbindung darstellt,
- X ein Sauerstoff-, Stickstoff- oder Schwefelatom darstellt,
- $R_3$ ein lineares oder verzweigtes Alkylradikal darstellt, das 1 bis 10, vorzugsweise 1 bis 5 Kohlenstoffatome enthält; und

(e) 0 bis 10%, vorzugsweise 0 bis 8%, eines beliebig anderen Monomers als die Monomere der Formeln I, II, III und IV;

wobei die genannte Polymerisation Folgendes beinhaltet:

- In-Lösung-Bringen der Monomere in einem destillierbaren organischen Lösungsmittel mit einer Siedetemperatur bei atmosphärischem Druck von weniger als 150°C; dann
- Verdünnen des Reaktionsmittels in Wasser in Anwesenheit einer mineralischen oder organischen Säure, um die Makromoleküle in Salz zu verwandeln.

**2.** Kationische fluorierte Acrylcopolymere nach Anspruch 1, **dadurch gekennzeichnet, dass** die Verdünnung mit Wasser in Anwesenheit von Wasserstoffperoxid erfolgt oder einer Behandlung mit einer wässrigen Wasserstoffperoxidlösung vorangeht.

**3.** Kationische fluorierte Acrylcopolymere nach Anspruch 1 oder 2, **dadurch gekennzeichnet, dass** Folgendes verwendet wird:

(a) als perfluorierte Monomere der Formel I die Verbindungen der Formel:

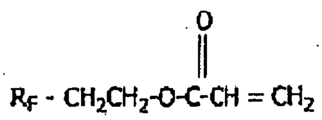

wobei $R_F$ ein Perfluoralkylradikal mit 4 bis 16 Kohlenstoffatomen ist;

(b) als Monomer der Formel II das Dimethylaminethylmethacrylat der Formel:

$$(CH_3)_2N\text{-}CH_2\text{-}CH_2\text{-}OC(O)\text{-}C(CH_3){=}CH_2;$$

(c) als Monomer der Formel III Vinylacetat; und
(d) als Monomer der Formel IV Vinyltriisopropoxysilan oder Propyltriisopropoxysilanmethacrylat.

4. Kationische fluorierte Acrylcopolymere nach einem der Ansprüche 1 bis 3, **dadurch gekennzeichnet, dass** als organisches Lösungsmittel Methylisobutylketon (MIBK) oder Methylethylketon (MEK) oder ein Gemisch aus diesen mit Aceton verwendet wird.

5. Kationische fluorierte Acrylcopolymere nach einem der Ansprüche 2 bis 4, **dadurch gekennzeichnet, dass** die verwendete Menge an Wasserstoffperoxid zwischen 0,5 und 4% bezogen auf das Gesamtgewicht der Anfangsmonomere beträgt.

6. Wässrige Zusammensetzungen, die 1 bis 50%, vorzugsweise 20 bis 30%, eines kationischen fluorierten Acrylcopolymers beinhalten, wie in den Ansprüchen 1 bis 5 definiert.

7. Feststoffsubstrat, das wenigstens ein kationisches fluoriertes Acrylcopolymer wie in den Ansprüchen 1 bis 5 definiert beinhaltet oder vorzugsweise damit überzogen ist.

8. Feststoffsubstrat nach Anspruch 7, **dadurch gekennzeichnet, dass** es sich um ein Baumaterial handelt.

9. Feststoffsubstrat nach Anspruch 8, **dadurch gekennzeichnet, dass** das Baumaterial aus Beton, Stein, Ziegel und Fliesen ausgewählt ist.

10. Baumaterial nach Anspruch 8 oder 9, **dadurch gekennzeichnet, dass** die angewendete Copolymerdosierung zwischen 0,1 und 10 g/$m^2$, vorzugsweise zwischen 1 und 5 g/$m^2$ liegt.

**Claims**

1. Fluorinated cationic acrylic copolymers obtainable by polymetising a mixture of monomers, comprising by weight:

(a) from 50 to 92%, preferably from 70 to 90%, of one or more polyfluorinated monomers of general formula:

$$Rf\text{-}B\text{-}O\text{-}C(O)\text{-}C(R)\text{=}CH\text{-}R \qquad (I)$$

wherein:

Rf represents a straight-chain or branched perfluorinated radical containing 2 to 20 carbon atoms, preferably 4 to 16 carbon atoms,
B represents a bivalent group linked to O via a carbon atom which may comprise one or more oxygen, sulphur and/or nitrogen atoms,
one of the symbols R represents a hydrogen atom and the other a hydrogen atom or an alkyl radical containing 1 to 4 carbon atoms;

(b) from 1 to 25%, preferably 8 to 18%, of one or more monomers of general formula:

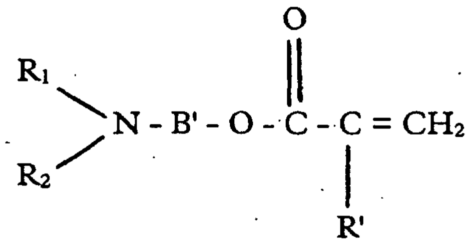

(II)

wherein :

B' represents a straight-chain or branched alkylene radical containing 1 to 4 carbon atoms,
R' represents a hydrogen atom or an alkyl radical containing 1 to 4 carbon atoms,
the symbols $R_1$ and $R_2$, which may be identical or different, each represent a hydrogen atom, a straight-chain or branched alkyl radical containing 1 to 18 carbon atoms (preferably 1 to 4 carbon atoms) or a hydroxyethyl or benzyl radical, or $R_1$ and $R_2$ together with the nitrogen atom to which they are attached form a morpholino, piperidino or 1-pyrrolidinyl radical;

(c) from 0 to 25%, preferably 2 to 10% of a vinyl derivative of general formula:

$$R'' - CH = CH_2 \qquad (III)$$

wherein R" is an alkylcarboxylate or alkylether group containing 1 to 18 carbon atoms, preferably 1 to 4 carbon atoms;
(d) from 0.5 to 20%, preferably 1 to 10%, of a monomer of general formula:

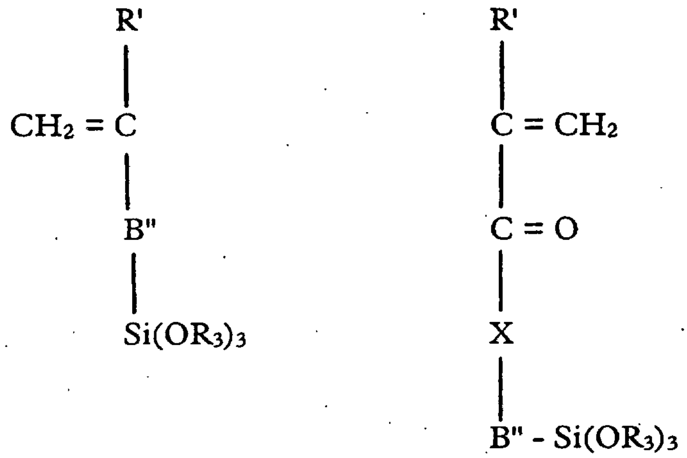

(IVA) or (IVB)

wherein:

R' is as hereinbefore defined,
B" represents B' as hereinbefore defined or a single bond,
X represents an oxygen, nitrogen or sulphur atom,
$R_3$ represents a straight-chain or branched alkyl radical comprising 1 to 10, preferably 1 to 5 carbon atoms; and

(e) from 0 to 10%, preferably 0 to 8% of any monomer other than the monomers of formulae (I), (II), (III) and (IV); said polymerisation comprising:

dissolving the monomers in a distillable organic solvent having a boiling point below 150°C at atmospheric pressure; then
diluting the reaction mixture with water in the presence of an inorganic or organic acid in order to form a salt with the macromolecules.

2. Fluorinated cationic acrylic copolymers according to claim 1, **characterised in that** the dilution with water is carried out in the presence of hydrogen peroxide, or is followed by a treatment using an aqueous solution of hydrogen peroxide.

**3.** Fluorinated cationic acrylic copolymers according to one of claims 1 or 2, **characterised in that** the following are used:

(a) as polyfluorinated monomers of formula I, compounds of general formula:

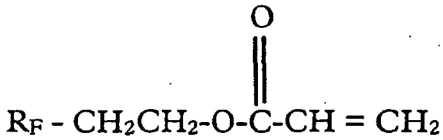

wherein $R_F$ is a perffuoroalkyl radical containing 4 to 16 carbon atoms;
(b) as the monomer of formula II, dimethylaminoethyl methacrylate of formula:

$$(CH_3)_2N\text{--}CH_2\text{-}CH_2\text{-}OC(O)\text{-}C(CH_3) = CH_2;$$

(c) as the monomer of formula III, vinyl acetate; and
(d) as the monomer of formula IV, vinyltriisopropoxysilane or propyltriisopropoxysilane methacrylate.

**4.** Fluorinated cationic acrylic copolymers according to one of claims 1 to 3, **characterised in that** the organic solvent used is methyl isobutyl ketone (MIBK) or methyl ethyl ketone (MEK) or a mixture of these with acetone.

**5.** Fluorinated cationic acrylic copolymers according to one of claims 2 to 4, **characterised in that** the quantity of hydrogen peroxide used is between 0.5 and 4% relative to the total starting weight of monomers.

**6.** Aqueous compositions comprising from 1 to 50%, preferably from 20 to 30% of a fluorinated cationic acrylic copolymer as defined in one of claims 1 to 5.

**7.** Solid substrate comprising, and preferably coated with, at least one fluorinated cationic acrylic copolymer as defined in one of claims 1 to 5.

**8.** Solid substrate according to claim 7, **characterised in that** it is a building material.

**9.** Solid substrate according to claim 8, **characterised in that** the building material is selected from among concrete, stone, brick and tiles.

**10.** Building material according to one of claims 8 or 9, **characterised in that** the quantity of copolymer applied is between 0.1 and 10 $g/m^2$, preferably between 1 and 5 $g/m^2$.

Figure 1

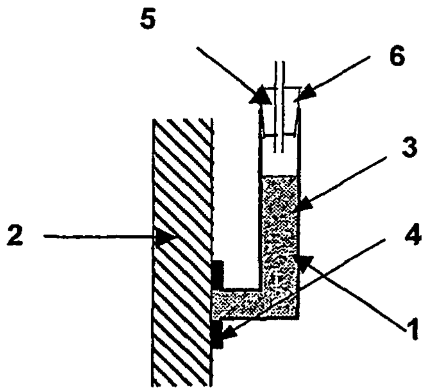


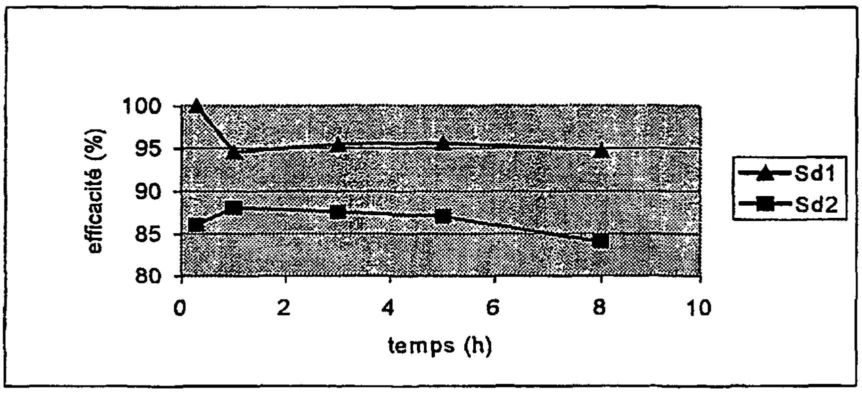


Figure 2

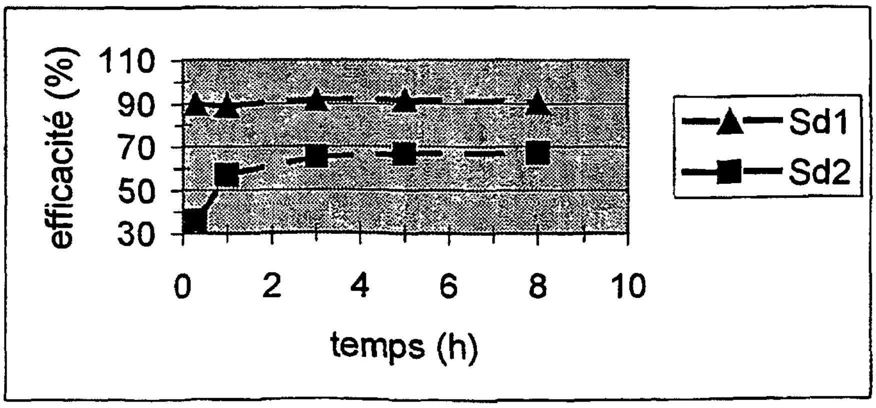


Figure 3